Europäisches Patentamt

European Patent Office

Office européen des brevets

(11) Numéro de publication: **0 285 555 B1**

# (12) FASCICULE DE BREVET EUROPEEN

(45) Date de publication de fascicule du brevet: **16.09.92**   (51) Int. Cl.⁵: **B23B 29/04**, B23Q 3/18

(21) Numéro de dépôt: **88810129.2**

(22) Date de dépôt: **02.03.88**

(54) **Dispositif de fixation d'un porte-outil sur une embase de fixation dans un centre d'usinage, spécialement de tournage.**

(30) Priorité: **05.03.87 CH 861/87**

(43) Date de publication de la demande:
**05.10.88 Bulletin 88/40**

(45) Mention de la délivrance du brevet:
**16.09.92 Bulletin 92/38**

(84) Etats contractants désignés:
**CH DE FR GB IT LI**

(56) Documents cités:
**GB-A- 150 770**
**US-A- 3 175 820**
**US-A- 3 466 955**

(73) Titulaire: **Tornos-Bechler SA Fabrique de Machines Moutier**
**111 rue Industrielle**
**CH-2740 Moutier (Kanton-Bern)(CH)**

(72) Inventeur: **Pruvot, François**
**Chemin de Ponfilet 82**
**CH-1093 La Conversion(CH)**
Inventeur: **Esteve, Xavier**
**Jolimont 1**
**CH-2740 Moutier(CH)**

(74) Mandataire: **Rochat, Daniel Jean et al**
**Bovard SA Ingénieurs-Conseils ACP Optingenstrasse 16**
**CH-3000 Bern 25(CH)**

## Description

Le développement des centres d'usinage va actuellement dans un sens tel que l'on cherche à augmenter autant que possible le nombre d'opérations d'usinage qui peuvent être faites sur une pièce sans dégager celle-ci de sa pince. Dans ce but, il est connu de prévoir, au voisinage du dispositif porte-pièce, une ou plusieurs tourelles équipées chacune d'un certain nombre de porte-outils. Cependant, une autre solution au problème posé consiste à prévoir à un endroit approprié une embase de fixation d'outil et d'équiper la machine de moyens de transfert aptes à prendre successivement des porte-outils rangés dans un magasin et à les amener et les fixer de manière automatique sur l'embase de façon à ce que les outils correspondants se trouvent alors en position de travail. Bien entendu, une même machine peut comporter plusieurs embases de fixation et cette ou ces embases peuvent être montées sur des supports mobiles à coulisses simples ou croisées ou, le cas échéant, à axe de rotation. Les embases de fixation peuvent être agencées de façon à recevoir des porte-outils supportant des outils qui sont eux-mêmes mobiles en rotation, et dans ce cas, l'embase comportera un accouplement à des moyens d'entraînement en rotation agissant sur l'outil lorsque ce dernier est en place.

Selon la norme VDI 3425 feuille 3, des embases de porte-outil de forme prismatique sont déjà connues. Ces embases présentent plusieurs faces d'appui et notamment trois faces, dont deux forment un dièdre, tandis que la troisième, orientée perpendiculairement à l'arête du dièdre, est une portion de surface limitée qui borde une gorge ménagée dans l'une des faces du dièdre. Le corps du porte-outil doit alors présenter trois faces correspondantes, qui, lors de la mise en place, viennent s'appliquer contre les faces du dièdre et contre la troisième face d'arrêt. Toutefois, cette disposition ne permet pas d'assurer la position du porte-outil par rapport à l'embase avec une précision suffisante eu égard aux exigences d'usinage qui sont posées actuellement. On connaît, d'autre part, notamment par les exposés de brevets US-3 694 879, US-4 220 061 et FR-2 339 086 des dispositifs qui assurent la fixation d'un porte-outil sur une embase, dans une position prédéterminée, par des moyens susceptibles d'être commandés automatiquement. Toutefois, ces dispositifs connus ne satisfont pas aux exigences de la technique dans toute la mesure désirable. On connaît enfin, par l'exposé du brevet US-3 466 955 un dispositif de fixation d'un porte-outil comportant un corps rigide sur une embase de fixation d'outil dans un centre d'usinage, comprenant d'une part sur l'embase de fixation ou sur le corps du porte-outil des portions de surfaces d'appui, fixes, déterminant un trièdre d'appui et sur l'autre partie du dispositif des portions de surfaces saillantes destinées à s'appuyer chacune contre une des dites portions de surface d'appui, et d'autre part des moyens d'application d'une force d'appui sur le corps du porte-outil, comportant un organe de mise en action se déplaçant entre une position inactive et une position de verrouillage quand le corps du porte-outil se trouve dans sa position de travail. Ce dispositif n'évite cependant pas entièrement les défauts constatés. Les portions de surface saillantes prévues sur le porte-outil sont destinées à ajuster la position de ce dernier sur l'embase de fixation, tandis que la fixation proprement dite est assurée par appui d'une face plane du corps de porte-outil contre une face correspondante de l'embase, et par appui d'une surface de came d'un organe de verrouillage contre une autre face du corps de porte-outil.

Le but de la présente invention est donc de remédier aux défauts des dispositifs connus et de proposer un dispositif de fixation apte à être actionné d'une manière simple et assurant une fixation stable du porte-outil dans une position qui est prédéterminée avec le maximum de précision.

Dans ce but, la présente invention, du genre spécifié plus haut est caractérisée en ce que les dites portions de surfaces saillantes sont des surfaces de calottes convexes, qui sont réparties en trois groupes coopérant chacun avec une des surfaces d'appui, et comportant respectivement trois calottes, deux calottes et une calotte, et en ce que les dits moyens d'application comportent des éléments de retenue complémentaires situés en des emplacements prédéterminés sur le corps du porte-outil et sur l'embase et conformés de manière que lorsque l'organe de mise en action est en position de verrouillage, ils pressent chaque calotte convexe contre la surface d'appui avec laquelle cette calotte coopère, avec une force prédéterminée, dont le point d'application est le point de contact entre la calotte convexe et la surface d'appui, et la somme de ces forces forme une force résultante ayant une ligne d'action prédéterminée, assurant l'immobilisation du corps de porte-outil sur l'embase pendant l'usinage exclusivement par l'appui des calottes convexes contre leurs surfaces d'appui.

On va décrire ci-après, à titre d'exemple, deux formes d'exécution de l'objet de l'invention, en se référant au dessin annexé, dont:

les fig. 1 à 4 se rapportent à la première forme d'exécution, et montrent schématiquement, respectivement en élévation longitudinale, en élévation latérale, en plan de dessus et en coupe par la ligne IV-IV de la fig. 3, le corps de porte-outil et les moyens de retenue de la première forme d'exécution,

la fig. 5 est une vue en perspective montrant de façon simplifiée l'embase de porte-outil et le porte-outil de la seconde forme d'exécution, et

la fig. 6 est un schéma montrant à l'échelle agrandie le jeu des forces engendrées par l'activation des moyens de retenue.

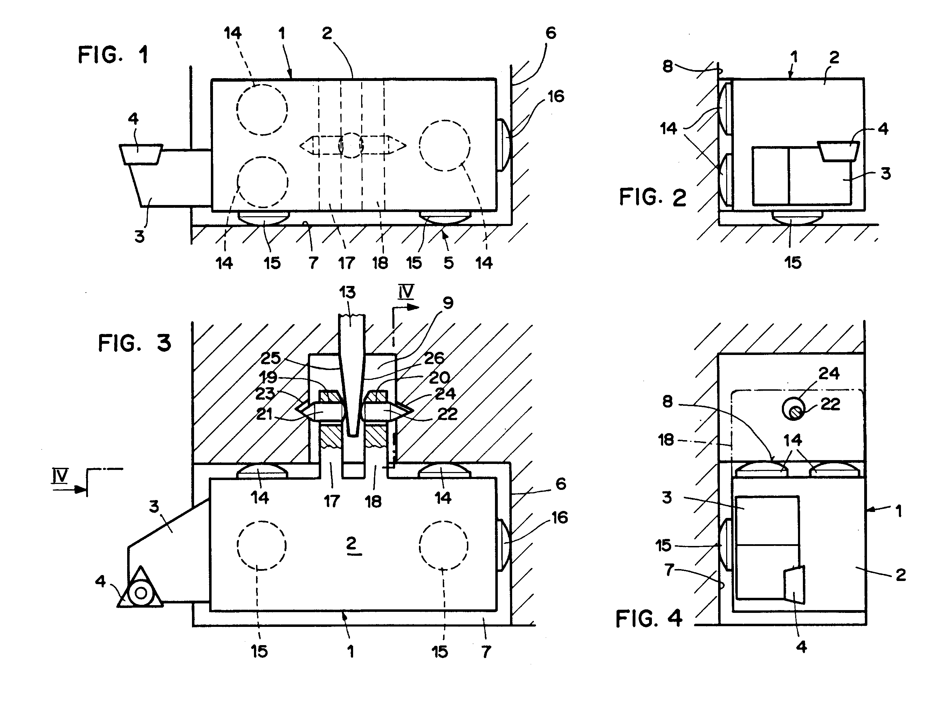

Le porte-outil 1 représenté au dessin comporte un corps prismatique 2 en forme de parallélépipède rectangle muni d'un prolongement 3 sur lequel est fixé, par exemple par soudage, une plaquette de métal dur ou de céramique 4. Le dispositif sera donc décrit sur la base d'un outil de tournage, mais il est bien évident que le corps 2 pourrait tout aussi bien servir de support à d'autres types d'outil, y compris des outils tournants, tels que forets, ou fraises. Aux fig. 1 à 4, l'embase 5 de fixation est représentée schématiquement, et on voit qu'elle présente un logement limité par trois faces planes principales 6, 7 et 8, qui forment entre elles un trièdre tri-rectangle intérieur. Dans la face 8 est ménagé un logement 9 pouvant présenter n'importe quelle forme convenable qui sera précisée plus loin.

Lors de la fabrication de l'embase, les faces 6, 7 et 8 seront soigneusement usinées et rectifiées, au moins localement comme nous le montrerons plus loin. Elles seront traitées de manière à présenter la dureté superficielle convenable.

Le corps 2 du porte-outil présente sur une de ses faces destinée à se trouver en regard de la face 8 du trièdre trois calottes sphériques 14 disposées en triangle en des endroits prédéterminés sur le corps 2. D'autre part, sur sa face située en regard de la face 7 du trièdre, le corps 2 présente deux calottes sphériques 15 qui, dans une forme préférentielle de l'invention sont réparties sur un axe parallèle à l'axe de symétrie de la disposition des trois calottes 14. Enfin, une sixième calotte 16 est prévue sur la face du corps 2 qui est opposée à la face 6 du trièdre. Cette sixième calotte est également prévue à un emplacement prédéterminé de façon à assurer la stabilité du porte-outil comme on le verra plus loin. Il est donc clair que les seules parties du trièdre devant être traitées et rectifiées sont localisées au droit des calottes mentionnées précédemment.

Pour coopérer avec des moyens de retenue montés sur l'embase, le corps du porte-outil comporte un agencement de verrouillage qui est constitué par deux brides parallèles 17 et 18 qui s'étendent en travers du corps d'outil 2 et sont agencées de façon à pouvoir pénétrer dans le logement 9 de l'embase. Ces deux brides 17 et 18 sont percées à leur partie centrale de forures cylindriques 19 et 20 de préférence coaxiales dans lesquelles sont engagées des goupilles de verrouillage 21 et 22 de forme cylindrique dont la longueur est supérieure à l'épaisseur des brides, et dont les extrémités extérieures ont une forme conique. Comme on le voit aux fig. 3 et 4, les pointes coniques des goupilles 21 et 22 coopèrent avec les faces internes de deux logements coniques 23 et 24 qui sont ménagés dans les flancs du logement 9 de l'embase. On notera que les angles d'ouverture des pointes coniques des goupilles 21 et 22 sont les mêmes que les angles d'ouverture des logements coniques 23 et 24. Dans une variante, ces angles peuvent être les mêmes pour chacune des deux goupilles 21 et 22, mais dans l'exemple de la fig. 3 ces angles sont différents. Le point essentiel est toutefois que l'axe commun des deux logements 23 et 24 est légèrement décalé par rapport à l'axe sur lequel doivent se trouver les pointes coniques des deux goupilles 21 et 22 lorsque le corps 2 est convenablement appuyé par ses six calottes sphériques contre les faces 6, 7 et 8 du trièdre d'appui de l'embase. Les corps de porte-outil avec leurs brides 17 et 18 et les goupilles 21 et 22 seront donc dimensionnés et ajustés de façon que la position de l'axe commun des pointes des goupilles, par rapport au sommet des calottes sphériques, soit exactement ajustée afin que, lors de la mise en place, le décalage prévu entre les axes respectifs des logements coniques et des pointes coniques soit réalisé. On se rend compte dès lors, que, lorsque le porte-outil est en place, si les deux goupilles 21 et 22 sont sollicitées de façon à glisser dans leurs forures 19 et 20 en s'écartant l'une de l'autre, une partie du flanc de leur pointe conique vient s'appuyer contre une partie du flanc interne du logement conique correspondant, de sorte que les deux cônes tendent à devenir coaxiaux. Il en résulte que le porte-outil 1 est alors soumis à une force F dont la direction est contenue dans le plan imaginaire défini par les deux axes dont il était question ci-dessus.

On comprend dès lors qu'il est possible de construire le corps du porte-outil en fonction des dimensions de l'embase et de positionner les calottes sphériques 14 et 16 de façon que, compte tenu des efforts s'appliquant au corps du porte-outil lors de l'usinage, la ligne d'action de la force F assure l'immobilisation et la stabilité du porte-outil. Cette ligne d'action, contenue dans le plan défini par les deux axes des sommets des goupilles et des sommets des logements aura une inclinaison prédéterminée par rapport aux plans 7 et 8 de l'embase

Pour appliquer la force F, il suffit qu'une tige 13 soit reliée par exemple à un vérin (non représenté) monté sur l'embase. Cette tige présentant à son extrémité deux faces planes en forme de coin 25 et 26, on voit qu'en se déplaçant de façon à engager ces faces 25 et 26 entre les extrémités arrière des goupilles 21 et 22, elle provoque automatiquement l'application de la force F. L'angle des surfaces 25 et 26 peut être ajusté de façon que la tige soit auto-coinçante, ce qui assure la sécurité de la fixation du porte-outil. Il suffit dès lors qu'un manipulateur amène le porte-outil approximativement dans la position représentée à la fig. 3, les goupilles 21 et 22 étant rétractées dans leurs forures, et que le vérin actionnant la tige 13 soit commandé, pour réaliser la fixation. En pratique, les goupilles 21 et 22 peuvent être retenues dans les forures 20 et 19 par des billes et des dispositifs à ressort (non représentés), ou autres.

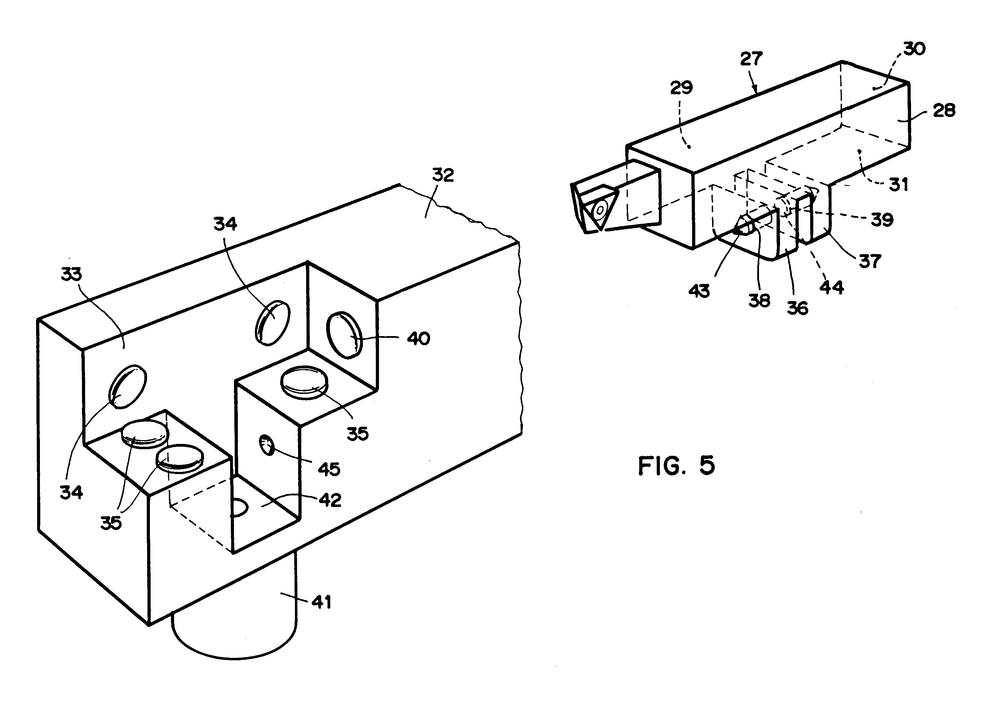

A la fig. 5, on voit une autre forme d'exécution du dispositif décrit. Le porte-outil 27 est également dans ce cas un burin. Son corps 28 présente trois faces planes 29, 30, 31 qui constituent un trièdre tri-rectangle externe. Il vient s'engager, lorsque le porte-outil 27 est amené par le manipulateur au voisinage de l'embase 32, dans un logement 33 dont les faces internes présentent des calottes sphériques saillantes. Trois calottes sphériques saillantes 34, sont situées dans une face du logement 33 de façon à coopérer avec la face 29 du corps 27. Deux autres calottes sphériques saillantes 35 sont ménagées sur des portions de surfaces du logement 33 qui correspondent avec les deux extrémités de la face 31. Le corps 28 présente dans sa face 31 au voisinage du milieu de cette face, deux brides saillantes 36 et 37 munies de forures cylindriques coaxiales 38 et 39 qui correspondent aux forures 20 et 19 de la première forme d'exécution. Finalement, le logement 33 présente encore, dans sa face extrême, une calotte sphérique saillante 40 qui correspond à la face 30 du corps 28 du porte-outil. On voit également à la fig. 5 le vérin 41 apte à commander une tige analogue à la tige 13, capable de venir s'engager entre les brides 36 et 37. Deux goupilles cylindriques à têtes coniques 43 et 44 sont disposées de façon à pouvoir glisser dans les forures 38 et 39, et sont sollicitées à l'écartement quand la tige du vérin 41 s'engage entre elles. Les moyens de retenue fonctionnent dans ce cas comme dans la première forme d'exécution. Un logement 42 de l'embase 32 présente des faces planes opposées avec des creusures coaxiales et opposées 45 qui coopèrent avec les pointes coniques des goupilles 43 et 44, comme dans la première forme d'exécution.

On pourrait aussi prévoir dans un flanc du logement 33, une ouverture et un palier supportant des moyens d'entraînement en rotation et agencer le porte-outil 27 de façon à ce qu'il porte un outil tournant comportant des moyens d'accouplement susceptibles d'être reliés aux moyens d'accouplement de l'embase de façon automatique lors de la mise en place du porte-outil.

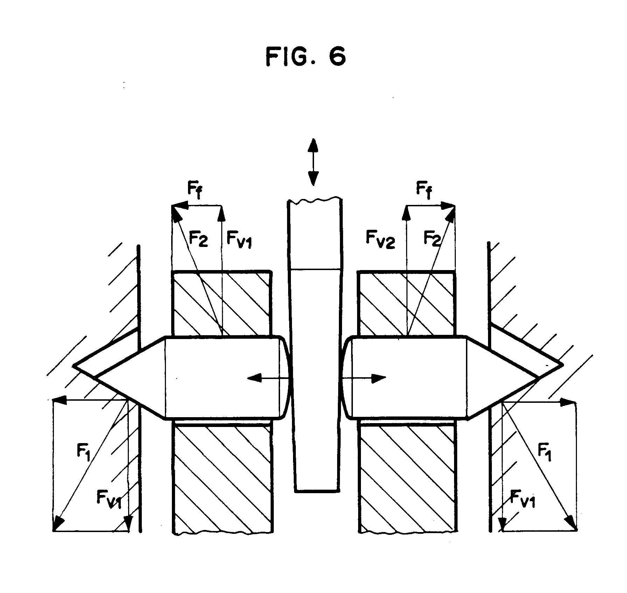

Finalement, le schéma de la fig. 6 montre le bilan simplifié des forces qui sont en jeu sur les différents éléments du dispositif de retenue au moment de l'action de la tige de vérin 13. Par leurs pointes coniques, les goupilles exercent sur le flanc du logement dans lequel elles s'engagent une force $F_1$ qui est perpendiculaire à l'inclinaison du flanc du logement, et présente une composante verticale $F_{vl}$ (Fig. 6). Les goupilles subissent elles-mêmes, de l'embase une force antagoniste à la force $F_{vl}$, qu'elles appliquent sur les brides du corps d'outil. Les forces $F_{vl}$ sont d'autant plus grandes que l'angle d'ouverture des cônes de la goupille et du logement est plus petit.

Du fait des forces de frottement $F_f$ entre les flancs des forures et les zones latérales des goupilles en contact avec eux, les forces réelles que les goupilles exercent sur le corps d'outil sont les forces $F_2$ (Fig. 6) constituées par la somme des forces $F_{vl}$ et des forces de frottement $F_f$. Finalement, la foce F qui s'applique au corps d'outil est la somme des deux forces $F_2$. Toutefois, le frottement inévitable entre la surface cylindrique de la goupille et le flanc de la forure dans lequel elle se déplace, sera d'autant plus grand que l'angle de la pointe de la goupille et de celle du logement sera plus fermée. Si donc ces angles sont plus fermés sur un des côtés du dispositif de retenue que sur l'autre, par exemple sur le côté tourné en se référant à la fig. 3 du côté de la face 6, la force d'appui résultante F exercée sur le porte-outil 1 aura en outre une composante dirigée vers la face 6, de sorte que la calotte sphérique 16 sera appuyée contre cette face.

Ainsi, le dispositif décrit permet d'appliquer le corps du porte-outil dans son logement d'une façon parfaitement déterminée et en exerçant sur lui une force dont la ligne d'action et la valeur sont également prédéterminées. Les expériences faites ont montré que:

a) la précision du repositionnement était meilleure que 5 microns,

b) la rigidité des appuis était supérieure à 100 da N/micron,

c) la mise en place automatique était possible dans au moins deux directions perpendiculaires,

d) la mise en place de moyens pour transmettre l'entraînement en rotation d'un outil tournant, ainsi que la circulation du liquide de coupe était possible sans problème.

Le rayon des calottes sphériques est déterminé en fonction des déformations respectives du porte-outil 2 et de l'embase 5 (fig. 1) de façon que le point de contact calotte/embase soit toujours situé à l'intérieur de la surface de la calotte. On doit comprendre que le rayon de la calotte sphérique doit être choisi le plus grand possible et qu'il pourra être d'autant plus grand que les pièces coopérantes 2 et 5 seront plus rigides.

**Revendications**

1. Dispositif de fixation d'un porte-outil comportant un corps rigide sur une embase de fixation d'outil dans un centre d'usinage, comprenant d'une part sur l'embase de fixation ou sur le corps du porte-outil des portions de surfaces d'appui, fixes, déterminant un trièdre d'appui et sur l'autre partie du dispositif des portions de surfaces saillantes destinées à s'appuyer chacune contre une des dites portions de surface d'appui, et d'autre part des moyens d'application d'une force d'appui sur le corps du porte-outil, comportant un organe de mise en action (13) se déplaçant entre une position inactive et une position de verrouillage quand le corps du porte-outil (2) se trouve dans sa position de travail, caractérisé en ce que les dites portions de surfaces saillantes (14, 15, 16) sont des surfaces de calottes convexes, qui sont réparties en trois groupes coopérant chacun avec une des surfaces d'appui, et comportant respectivement trois calottes (14), deux calottes (15) et une calotte (16), et en ce que les dits moyens d'application comportent des éléments de retenue complémentaires (21. 22. 23. 24) situés en des emplacements prédéterminés sur le corps du porte-outil et sur l'embase et conformés de manière que lorsque l'organe de mise en action (13) est en position de verrouillage, ils pressent chaque calotte convexe contre la surface d'appui avec laquelle cette calotte coopère, avec une force prédéterminée, dont le point d'application est le point de contact entre la calotte convexe et la surface d'appui, et la somme de ces forces forme une force résultante ayant une ligne d'action prédéterminée, assurant l'immobilisation du corps (2) de porte-outil sur l'embase (5) pendant l'usinage exclusivement par l'appui des calottes convexes (14, 15, 16) contre leurs surfaces d'appui (6, 7, 8).

2. Dispositif selon la revendication 1, caractérisé en ce que le trièdre est un trièdre tri-rectangle et en ce que la dite ligne d'action est orientée obliquement par rapport à au moins deux des faces du trièdre.

3. Dispositif selon la revendication 2, caractérisé en ce que le nombre des calottes est de six et en ce que celles-ci sont réparties de manière que trois d'entre elles (14) coopèrent avec une première face (8) du trièdre, deux autres (15) avec une seconde face (7) et la sixième (16) avec la troisième face (6) du trièdre.

4. Dispositif selon la revendication 1, caractérisé en ce que les éléments de retenue comportent d'une part un ou plusieurs éléments glissants (21, 22), d'autre part une rampe (23, 24) pour chaque élément glissant, et des moyens pour guider (19, 20) et actionner (25, 26) les éléments glissants de manière qu'ils progressent le long des rampes, lors de l'activation de l'organe de mise en action (13), la direction de guidage des éléments et l'orientation des rampes déterminant un plan dans lequel la ligne d'action de la force est contenue.

5. Dispositif selon la revendication 4, caractérisé en ce que les dits éléments de retenue (21-24) sont constitués de deux éléments glissants (21, 22) coaxiaux et antagonistes, à pointes coniques, et de deux rampes formées de logements (23, 24) également coniques et coaxiaux, l'axe des logements étant parallèle à celui des éléments glissants, et ces deux axes définissant l'inclinaison du dit plan contenant la ligne d'action de la force d'appui.

6. Dispositif selon la revendication 5, caractérisé en ce que l'une des pointes coniques (22) et le logement correspondant (24) présentent un angle d'ouverture qui est différent de l'angle d'ouverture de l'autre pointe conique (21) et de l'autre logement (23).

7. Dispositif selon la revendication 1, caractérisé en ce que les dites calottes (14-16) sont sphériques, avec un rayon de courbure calculé pour satisfaire les conditions suivantes:
   a) être le plus grand possible pour offrir une rigidité de contact maximum,
   b) avoir le point de contact embase-calotte toujours à l'intérieur de la surface sphérique, malgré les déformations prévisibles du porte-outil et de l'embase.

8. Dispositif selon la revendication 1, caractérisé en ce que des buses de nettoyage sont disposées à proximité des calottes, de manière à pouvoir périodiquement nettoyer celles-ci par projection d'un fluide.

9. Dispositif selon la revendication 4, caractérisé en ce qu'il comporte sur l'embase (5) un logement ou une saignée agencés de façon que le porte-outil (1) puisse être mis en place dans plusieurs directions.

10. Dispositif selon la revendication 9, caractérisé en ce que l'agencement de la saignée est tel que les directions de mise en place du porte-outil font entre elles un angle de 90° au maximum, si le trièdre est un trièdre trirectangle, et un angle supérieur à 90° si le trièdre comporte un angle supérieur à 90°.

## Claims

1. A device for mounting a tool-holder having a rigid body on a tool-mounting base in a machining centre, comprising on the one hand, on the base or on the body of the tool-holder, a plurality of fixed support-surface portions defining a support trihedron, and on the other part of the device a plurality of projecting surface portions each intended to press against one of said support-surface portions, and, on the other hand, means for applying a pressing force on the body of the tool-holder, comprising an actuating component (13) which moves between an inactive position and a locking position when the body of the tool-holder (2) is in the working position, characterized in that said projecting surface portions (14, 15, 16) are convex cap surfaces distributed in three groups each co-operating with one of the support-surfaces, and comprising respectively three cap surfaces (14), two cap surfaces (15) and one cap surface (16), and in that the said means for applying a force comprise complementary retaining elements (21. 22. 23. 24) located at predetermined locations on the body of the tool-holder and on the base and arranged so that when the actuating component (13) is in the locking position they press each convex cap surface against the support-surface with which that cap surface cooperates, with a predetermined force, the point of application of which is the point of contact between the convex cap surface and the support-surface, and the sum of these forces forms a resultant force with a predetermined line of action, ensuring the immobilization of the body (2) of the tool-holder on the base (5) during machining exclusively by means of pressing the convex cap surfaces (14, 15, 16) against their support-surfaces (6, 7, 8).

2. The device of claim 1, characterized in that the trihedron is a trirectangular trihedron and in that the said line of action is oriented obliquely relative to at least two faces of the trihedron.

3. The device of claim 2, characterized in that there are six cap surfaces, and in that they are distributed so that three of them (14) co-operate with a first face (8) of the trihedron, two others (15) with a second face (7) and the sixth (16) with the third face of the trihedron.

4. The device of claim 1, characterized in that the retaining elements comprise on the one hand one or several sliding elements (21, 22), on the other hand a ramp (23, 24) for each sliding element, and means for guiding (19, 20) and actuating (25, 26) the sliding elements for movement along the ramps upon activation of the actuating component (13), the direction of guidance of the elements and the orientation of the ramps determining a plane containing the line of action of the force.

5. The device of claim 4, characterized in that said retaining elements (21-24) comprise two coaxial and opposing sliding elements (21, 22) with conical tips, and two ramps formed by recesses (23, 24) which are also conical and coaxial, the axis of the recesses being parallel to that of the sliding elements, and these two axes defining the inclination of said plane containing the line of action of the pressing force.

6. The device of claim 5, characterized in that one of the conical tips (22) and the corresponding recess (24) have an aperture angle different from the aperture angle of the other conical tip (21) and the other recess (23).

7. The device of claim 1, characterized in that the said cap surfaces (14-16) are spherical, with a radius of curvature calculated to satisfy the following conditions:
   (a) being the largest possible for offering maximum rigidity of contact,
   (b) always having the point of contact between the base and the cap surface on the inside of the spherical surface, despite the forseeable deformations of the tool-holder and the base.

8. The device of claim 1, characterized in that cleaning nozzles are disposed near the cap surfaces so as to be able to clean the latter periodically by ejecting a fluid.

9. The device of claim 4, characterized in that it comprises on the base (5) a recess or an incision arranged so that the tool-holder (1) may be positioned in several directions.

10. The device of claim 9, characterized in that the incision is arranged so that the directions of the positions of the tool-holder make up between them a maximum angle of 90°, if the trihedron is a trirectangular trihedron, and an angle greater than 90° if the trihedron comprises an angle greater than 90°.

## Patentansprüche

**1.** Spannvorrichtung eines Werkzeughalters mit einem auf einer Werkzeug-Spannbasis enthaltenen starren Körper in einem Bearbeitungszentrum, bei welcher einerseits auf der Spannbasis oder auf dem Körper des Werkzeughalters Abstützflächen angeordnet sind, die feststehend sind und die ein Trieder zur Abstützung bestimmen, während auf dem andern Teil der Vorrichtung aus der Fläche vorstehende Teile vorgesehen sind, von denen jeder gegen eine der besagten Abstützflächen abstützbar ist und andererseits Mittel zur Aufbringung einer Abstützkraft auf dem Körper des Werkzeughalters vorgesehen sind, bestehend aus einem Betätigungsorgan (13), das sich von einer inaktiven Stellung in eine Verriegelungsstellung bringen lässt, wenn sich der Körper des Werkzeughalters (2) in seiner Arbeitsposition befindet, dadurch gekennzeichnet, dass die besagten, aus der Fläche vorstehenden Teile (14, 15, 16) eine konvexe, kalottenförmige Oberfläche haben, die in drei Gruppen verteilt sind, wovon jede mit einer der Abstützflächen zusammenwirkt, und die aus drei Kalotten (14) bzw. zwei Kalotten (15) und einer Kalotte (16) bestehen und dass die besagten Mittel zur Aufbringung einer Kraft ergänzende Halteelemente (21, 22, 23, 24) enthalten, die auf vorbestimmten Stellen auf dem Körper des Werkzeughalters und auf der Spannbasis angeordnet sind, und die so gestaltet sind, dass, wenn das Betätigungsorgan (13) in der Verriegelungsstellung ist, jede konvexe Kalotte mit einer vorbestimmten Kraft gegen die Abstützfläche pressbar ist, mit welcher die entsprechende Kalotte zusammenwirkt, wobei der Angriffspunkt der Berührungspunkt zwischen der konvexen Kalotte und der Abstützfläche ist und die Summe dieser Kräfte eine resultierende Kraft mit einer vorbestimmten Wirkungslinie ergibt, wodurch die Festhaltung des Körpers (2) des Werkzeughalters auf der Spannbasis (5) während der Bearbeitung ausschliesslich durch die Abstützung der konvexen Kalotten (14, 15, 16) gegen ihre Abstützflächen (6, 7, 8) gewährleistet ist.

**2.** Vorrichtung nach Anspruch 1, dadurch gekennzeichnet, dass das Trieder ein rechteckiges Trieder ist und dass die besagte wirkungslinie in bezug auf mindestens zwei Flächen des Trieders schräg ausgerichtet ist.

**3.** Vorrichtung nach Anspruch 2, dadurch gekennzeichnet, dass die Anzahl der Kalotten sechs beträgt und dass diese Kalotten derart verteilt sind, dass drei Kalotten (14) von diesen mit einer ersten Fläche (8) des Trieders, zwei weitere Kalotten (15) mit einer zweiten Fläche (7) des Trieders und die sechste Kalotte (16) mit einer dritten Fläche (6) des Trieders zusammenwirken.

**4.** Vorrichtung nach Anspruch 1, dadurch gekennzeichnet, dass die Halteelemente einesteils ein oder mehrere Gleitelemente (21, 22) und anderenteils eine schiefe Ebene (23, 24) für jedes Gleitelement, Führungsmittel (19, 20) und Betätigungsmittel (25, 26) für die Gleitelemente aufweisen, so dass diese bei der Aktivierung des Betätigungsorgans (13) entlang der schiefen Ebenen fortschreiten, wobei die Richtung der Führung der Elemente und die Ausrichtung der schiefen Ebenen eine Ebene bestimmen, in welcher die Wirkungslinie der Kraft enthalten ist.

**5.** Vorrichtung nach Anspruch 4, dadurch gekennzeichnet, dass die besagten Halteelemente (21 - 24) aus zwei koaxialen, gegenwirkenden Gleitelementen (21, 22) mit konischen Spitzen zusammengesetzt sind und die beiden, die Aufnahme (23, 24) bildenden schiefen Ebenen ebenfalls konisch und koaxial sind, wobei die Achse der Aufnahmen parallel zu derjenigen der Gleitelemente ist und dass diese beiden Achsen die Neigung der besagten Ebene, welche die Wirkungslinie der Abstützkraft enthält, bestimmen.

**6.** Vorrichtung nach Anspruch 5, dadurch gekennzeichnet, dass die eine der konischen Spitzen (22) und die entsprechende Aufnahme (24) einen Oeffnungswinkel aufweisen, der unterschiedlich zum Oeffnungswinkel der anderen konischen Spitze (21) und der anderen Aufnahme (23) ist.

**7.** Vorrichtung nach Anspruch 1, dadurch gekennzeichnet, dass die besagten Kalotten (14 - 16) sphärisch sind, mit einem berechneten Wölbungsbereich, der die folgenden Bedingungen erfüllt:
a) möglichst gross, damit eine maximale Kontaktstarrheit erreichbar ist,
b) der Kontaktpunkt zwischen Basis und Kalotte befindet sich immer innerhalb der sphärischen Oberfläche, trotz der voraussichtlichen Verformungen des Werkzeughalters und der Basis.

**8.** Vorrichtung nach Anspruch 1, dadurch gekennzeichnet, dass Reinigungsdüsen in der Nähe der Kalotten angeordnet sind, wodurch diese durch Einspritzen einer Flüssigkeit periodisch reinigbar sind.

9. Vorrichtung nach Anspruch 4, dadurch gekennzeichnet, dass auf der Basis (5) eine Lagerung oder ein Einschnitt angeordnet ist, wodurch der Werkzeughalter in mehreren Richtungen angebracht werden kann.

10. Vorrichtung nach Anspruch 9, dadurch gekennzeichnet, dass die Anordnung des Einschnittes so ist, dass die Richtungen, in welchen der Werkzeughalter anbringbar ist, zwischen sich einen Winkel von maximal 90° bilden, wenn das Trieder ein rechteckiges Trieder ist, und einen Winkel von mehr als 90° bilden, wenn das Trieder einen Winkel enthält, der grösser als 90° ist.

FIG. 1

FIG. 2

FIG. 3

FIG. 4

FIG. 5

# FIG. 6